# FASCICULE DE BREVET EUROPEEN

(11) **EP 2 564 356 B1**
(45) Date de publication et mention de la délivrance du brevet: **07.08.2019**
(21) Numéro de dépôt: 11725130.6
(22) Date de dépôt: 26.04.2011
(51) Int. Cl.: G06K 9/62

(54) **OUTIL INFORMATIQUE A REPRESENTATION PARCIMONIEUSE**
COMPUTERWEKZEUG FÜR SPARSAME DARSTELLUNG
COMPUTER TOOL WITH SPARSE REPRESENTATION

(30) Priorité: 26.04.2010 FR 1001771
(43) Date de publication de la demande: 06.03.2013
(73) Titulaire: INRIA - Institut National de Recherche en Informatique et en Automatique, 78150 Le Chesnay (FR); Universite De Rennes 1, 35065 Rennes Cedex (FR)
(72) Inventeur: GUILLEMOT, Christine, F-35135 Chantepie (FR); ZEPEDA, Joaquin, F-35200 Rernnes (FR); KIJAK, Ewa, 35340 Erce Pres Liffre (FR)
(74) Mandataire: Bell, Mark
(86) Numéro de dépôt international: PCT/FR2011/050947
(87) Numéro de publication internationale: WO 2011/135248

(56) Documents cités:
- CHINH LA ET AL: "Tree-Based Orthogonal Matching Pursuit Algorithm for Signal Reconstruction", IMAGE PROCESSING, 2006 IEEE INTERNATIONAL CONFERENCE ON, IEEE, PI, 1 octobre 2006 (2006-10-01), pages 1277-1280, XP031048877, ISBN: 978-1-4244-0480-3
- DAUDET L.: "sparse and structured decomposition of signals with the molecular matching pursuit", IEEE TRANS. ON AUDIO SPEECH AND LANGUAGE PROCESSING, vol. 14, no. 5, septembre 2006 (2006-09), pages 1808-1816, XP002627741,
- MAILHÉ B., GRIBONVAL R., BIMBOT F. AND VANDERGHEYNST P.: "Local orthogonal greedy pursuits for scalable sparse approximations of large signals with shift invariant dictionaires", SPARS'09 CONFERENCE ON SIGNAL PROCESSING WITH ADAPTIVE SPARSE STRUCTURES REPRESENTATIONS 2009, 2009, XP002627742,
- PHILIPPE JOST ET AL: "Tree-Based Pursuit: Algorithm and Properties", IEEE TRANSACTIONS ON SIGNAL PROCESSING, IEEE SERVICE CENTER, NEW YORK, NY, US, vol. 54, no. 12, 1 décembre 2006 (2006-12-01), pages 4685-4697, XP011150620, ISSN: 1053-587X, DOI: DOI:10.1109/TSP.2006.882080
- KARABULUT G Z ET AL: "Integrating flexible tree searches to orthogonal matching pursuit algorithm", IEE PROCEEDINGS: VISION, IMAGE AND SIGNAL PROCESSING, INSTITUTION OF ELECTRICAL ENGINEERS, GB, vol. 153, no. 5, 12 octobre 2006 (2006-10-12), pages 538-548, XP006027367, ISSN: 1350-245X, DOI: DOI:10.1049/IP-VIS:20050201
- RAHMOUNE A ET AL: "The M-Term Pursuit for Image Representation and Progressive Compression", IMAGE PROCESSING,2005. ICIP 2005,, vol. 1, 11 septembre 2005 (2005-09-11), pages 73-76, XP010850689, DOI: DOI:10.1109/ICIP.2005.1529690 ISBN: 978-0-7803-9134-5
- COTTER S F ET AL: "Application of tree-based searches to matching pursuit", 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001; [IEEE INTERNATIONAL CONFERENCE ON ACOUSTICS, SPEECH, AND SIGNAL PROCESSING (ICASSP)], NEW YORK, NY : IEEE, US, vol. 6, 7 mai 2001 (2001-05-07), pages 3933-3936, XP010803103, DOI: DOI:10.1109/ICASSP.2001.940704 ISBN: 978-0-7803-7041-8

## Description

L'invention concerne le domaine de la représentation parcimonieuse d'un signal de manière informatique.

Les représentations partent d'un ensemble de données connues appelé dictionnaire. La représentation parcimonieuse est obtenue en sélectionnant les atomes du dictionnaire qui sont les plus proches du contenu à compresser, et en ne transmettant que des informations relatives à ces atomes.

En général, un algorithme de la famille "matching pursuit" (ou "poursuite adaptative", ci-après algorithme MP) est mis en oeuvre pour déterminer la représentation parcimonieuse à partir du contenu à compresser et du dictionnaire.

Les outils informatiques mettant en oeuvre ce type de schéma sont très puissants, car le taux de compacité de l'approximation obtenue est élevé, et les algorithmes de "matching pursuit" sont très efficaces. Cependant, il est difficile d'obtenir un dictionnaire performant sur des types de données variés car cela nécessite un dictionnaire de grande taille, ce qui est pénalisant en coûts de stockage et de calcul.

Diverses méthodes ont été développées pour compenser ce désavantage. L'une de ces méthodes est la méthode dite K-SVD. Selon cette méthode, un dictionnaire est optimisé en fonction du nombre d'itérations qui est envisagé.

Bien qu'elle donne un certain degré de satisfaction, cette méthode reste généralement insuffisante. En effet, elle fournit un dictionnaire qui est optimisé en moyenne, mais pas forcément pour chacune des itérations de l'algorithme MP. En outre, ce dictionnaire est figé pour toutes les itérations, et en général inadapté si l'on décide de changer le nombre d'itérations.

Document D1 (PHILIPPE JOST ET AL: "Tree-Based Pursuit: Algorithm and Properties", IEEE TRANSACTIONS ON SIGNAL PROCESSING, IEEE SERVICE CENTER, NEW YORK, NY, US, vol. 54, no. 12, (2006-12-01), pages 4685-4697) présente une technique de représentation parcimonieuse d'un signal à l'aide d'un algorithme de poursuite en arbre et d'un dictionnaire. Selon cette technique, on partitionne le dictionnaire en des sous-dictionnaires disjoints représentés chacun par un élément appelée « molécule » (cf lignes 3-8 du paragraphe III-B). Pour chaque itération n, visant à approximer un résidu Rⁿf, plutôt que de tester chaque atome du dictionnaire, l'algorithme parcourt tous les noeuds de la structure arborescente de l'arbre depuis la racine jusqu'à une feuille de l'arbre, en suivant le chemin des molécules qui approximent le mieux le résidu (cf. lignes 12-20 du paragraphe IV-A). D1 ne fait nullement mention que, pour chaque itération n, visant à approximer un résidu Rⁿf, on ne s'intéresse qu'à un niveau donné de l'arbre. En particulier, D1 ne décrit nullement le fait que la loi de sélection est basée sur l'identifiant d'atome défini lors de l'itération précédente. L'invention, telle que revendiquée, vient améliorer la situation.

À cet effet, l'outil informatique de traitement d'un signal, tel que revendiqué, comprend :
- une mémoire de travail pour recevoir des données d'entrée,
- une mémoire auxiliaire pour stocker une pluralité de dictionnaires d'approche,
- un réducteur agencé pour calculer itérativement des données d'approximation de données d'entrée, les itérations successives étant de type poursuite adaptative,
- un sélectionneur agencé pour choisir un dictionnaire d'approche dans ladite mémoire auxiliaire en fonction d'une loi de sélection basée sur certaines au moins des itérations précédentes,
dans lequel le réducteur appelle le sélectionneur à chaque itération et utilise le dictionnaire ainsi choisi dans la poursuite adaptative,
dans lequel pour une itération donnée, et en présence d'un dictionnaire d'approche choisi par le sélectionneur, le réducteur : détermine un atome du dictionnaire d'approche correspondant aux données d'entrée courantes de l'itération donnée, définit un identifiant d'atome correspondant et un coefficient de proportionnalité entre les données d'entrée courantes et l'atome comme données d'approximation, calcule un résidu correspondant à la différence entre les données d'entrée et l'atome multiplié par son coefficient de proportionnalité, et appelle l'itération suivante avec l'identifiant d'atome pour le sélectionneur et le résidu comme nouvelles données d'entrée courantes, la loi de sélection pour l'itération suivante étant basée sur l'identifiant d'atome défini lors de l'itération donnée.

D'autres caractéristiques et avantages de l'invention apparaîtront mieux à la lecture de la description qui suit, tirée d'exemples donnés à titre iilustratif et non limitatif, tirés des dessins sur lesquels :
- la figure 1 représente un procédé d'obtention d'une représentation parcimonieuse selon l'invention,
- la figure 2 représente un outil informatique mettant en oeuvre le procédé de la figure 1,
- la figure 3 représente un schéma d'une arborescence de dictionnaires pour le procédé de la figure 1,
- la figure 4 représente un exemple d'une fonction de choix de dictionnaire pour le procédé de la figure 1, adapté à l'arborescence de dictionnaires de la figure 3,
- la figure 5 représente une fonction de génération des dictionnaires de la figure 3,
- la figure 6 représente un diagramme de flux d'une opération de la figure 5,
- la figure 7 représente un diagramme de flux d'une autre opération de la figure 5,
- les figures 8 et 9 représentent des variantes des figures 5 et 7, et
- les figures 10 et 11 représentent d'autres variantes des figures 5 et 7.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

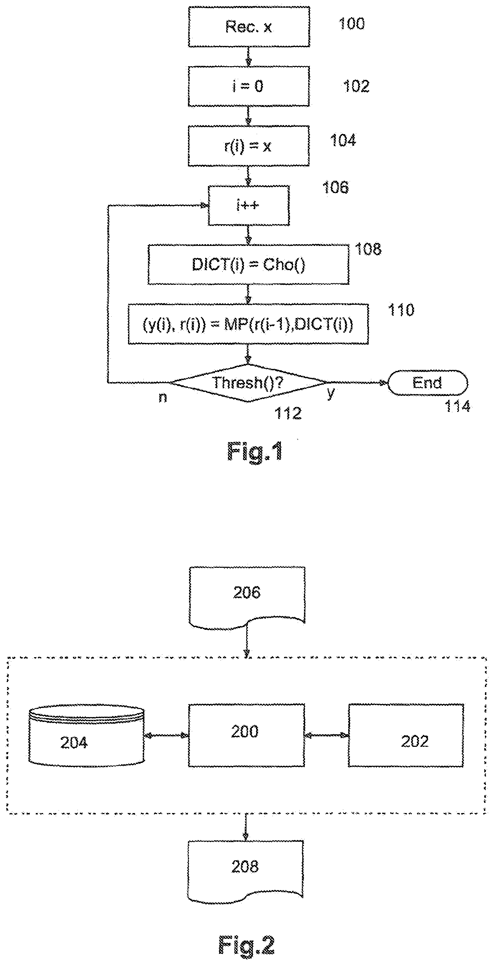

La figure 1 représente un procédé de calcul d'une représentation parcimonieuse selon l'invention.

Ce procédé commence par une opération 100 de réception d'un élément courant x à approcher par un vecteur creux dit parcimonieux. L'élément x peut être tout type de donnée informatique à encoder. Par exemple, cet élément peut être un bloc d'image au sein d'une image ou d'un flux d'images à encoder, ou encore une trame sonore dans un extrait musical, ou autre.

Dans une opération 102, un compteur d'itération i est initialisé, et dans une opération 104, une variable de résidu r(i) reçoit l'élément x. La variable de résidu r(i) reçoit à chaque itération le reste de l'approximation courante, et constitue l'élément approché à l'itération suivante, comme cela est classique dans un algorithme MP.

La représentation parcimonieuse de x est calculée au moyen d'une boucle qui comprend une opération 106 d'incrémentation du compteur d'itérations, suivie d'une opération 108 de choix de dictionnaire pour l'itération courante, d'une opération 110 de calcul du vecteur d'approche, et d'une opération 112 de test de condition de sortie de boucle.

Lorsque la boucle est terminée, l'opération de réduction de l'élément x est terminée, et le procédé se termine dans une opération 114 par la transmission des données calculées et le démarrage de la réduction de l'élément x suivant.

L'opération 108 comprend l'appel d'une fonction Cho() qui reçoit le compteur d'itération i comme argument, et renvoie en réponse un dictionnaire optimisé pour cette itération, qui est stocké dans une variable DICT(i).

Dans l'opération 110, une fonction MP() est appelée avec le résidu de l'itération précédente r(i-1), ainsi que le dictionnaire de l'itération courante DICT(i). Ainsi, d'itération en itération, l'élément x est approché selon la formule classique des algorithmes MP.

On notera que la fonction MP() peut mettre en oeuvre n'importe quel type d'algorithme de la famille des algorithmes MP.

Le résultat de l'opération 110 est une approximation y(i) et un résidu r(i). L'approximation y(i) comprend un identifiant de l'atome du dictionnaire DICT(i) qui s'approche le plus du reste de l'itération précédente r(i-1), et son coefficient multiplicateur.

La condition de sortie de boucle de l'opération 112 peut être testée par une fonction Thresh(). La fonction Thresh() peut prendre en compte une ou plusieurs conditions choisies parmi :
- un nombre maximal d'itérations, c'est-à-dire un nombre maximal pour i,
- une mesure de l'énergie résiduelle dans r(i), c'est-à-dire le calcul d'une norme du résidu r(i) et la comparaison à un seuil de précision visé.

Le procédé de recherche du vecteur parcimonieux présenté ici est particulièrement intéressant car la fonction Cho() permet d'adapter le choix du dictionnaire à l'itération en cours.

Cela signifie qu'il sera possible d'être plus précis en un nombre comparable d'itérations par rapport aux approches de l'art antérieur. Par ailleurs, cela rend aussi le procédé indépendant du nombre d'itérations prévues pour la recherche du vecteur parcimonieux : comme un dictionnaire est choisi spécifiquement à chaque itération, le nombre total d'itérations importe peu.

La figure 2 représente un schéma simplifié d'un outil informatique mettant en oeuvre le procédé de la figure 1.

L'outil informatique selon l'invention comprend un sélectionneur 200 de dictionnaire et un réducteur 202 de vecteurs, ainsi qu'une mémoire 204 pour stocker les dictionnaires DICT(i).

L'outil reçoit des éléments x sous la forme de données 206, et renvoie des données de représentation parcimonieuse 208.

L'outil informatique décrit ici représente un élément qui est propre à être incorporé dans un dispositif informatique qui utilise les représentations parcimonieuses, par exemple un dispositif d'encodage/de décodage, de débruitage, de prédiction, ou de séparation de sources. En tant que tel, il est adapté pour être une « brique » de traitement d'un dispositif plus large.

L'homme du métier saura donc reconnaître que les données 206 et 208 peuvent être stockées dans une mémoire temporaire de l'outil, ou dans la mémoire 204, et que ces mémoires peuvent être celles d'un dispositif dans lequel l'outil informatique est intégré.

D'autre part, l'homme du métier saura également reconnaître que le sélectionneur 200 et le réducteur 202 peuvent être mis en oeuvre séparément ou ensemble, de manière logicielle c'est-à-dire sous forme de code exécuté par un processeur généraliste d'un dispositif auquel l'outil informatique est intégré, ou de manière « physique » c'est-à-dire par un ou plusieurs processeurs dédiés.

Comme on le verra dans ce qui suit, les dictionnaires au sein de la mémoire 204 ne sont pas stockés au hasard ou générés automatiquement par la fonction Cho(). Ces dictionnaires sont intrinsèquement associés aux itérations du réducteur, comme on le verra par la suite.

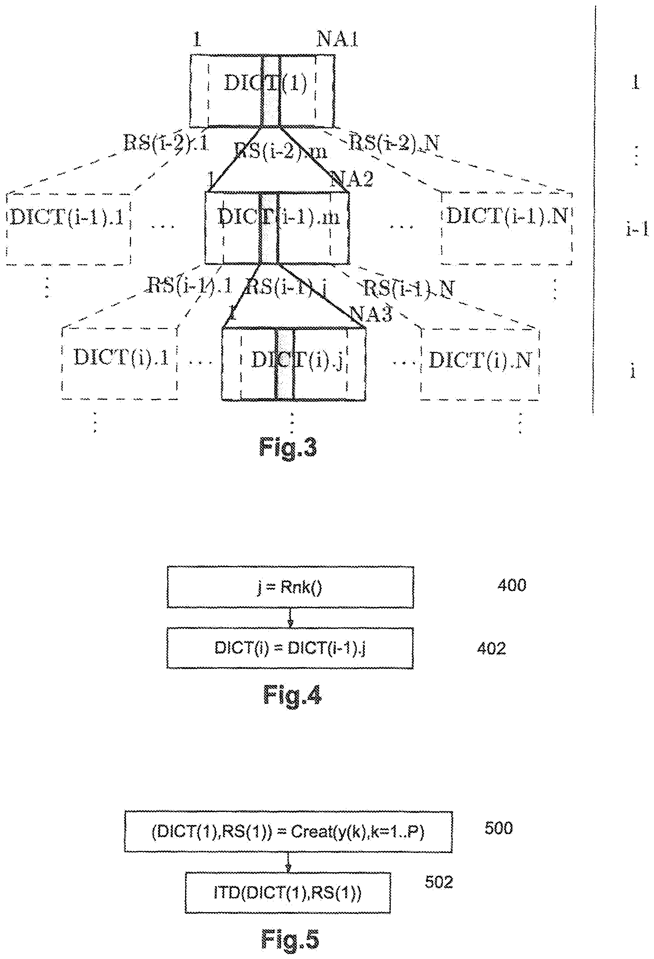

La figure 3 représente un exemple d'architecture de dictionnaires pour la mise en oeuvre du procédé de la figure 1.

Dans cette architecture, les dictionnaires sont organisés selon un arbre. Dans cet arbre, chaque niveau va contenir l'ensemble des dictionnaires disponibles pour l'itération dont le numéro correspond au niveau de l'arbre.

Ainsi, le premier niveau de l'arbre comprend un unique dictionnaire qui sera utilisé pour la première itération, le deuxième niveau de l'arbre comprend un ensemble de dictionnaires qui seront utilisés pour la deuxième itération, etc.

En outre, dans l'exemple décrit ici, chaque dictionnaire choisi pour une itération conditionne le choix du dictionnaire à l'itération suivante. En effet, comme on le verra avec la description des figures 5 à 7, il est possible d'entraîner des dictionnaires en fonction des « chemins de dictionnaires » pris aux itérations précédentes.

La figure 4 représente un exemple de mise en oeuvre de la fonction Cho() qui s'appuie sur l'architecture arborescente de la figure 3.

Dans une opération 400, la fonction Cho() récupère l'indice de l'atome qui a été choisi pour approcher le résidu à l'itération précédente. Pour cela, une fonction Rnk() reçoit comme arguments l'approximation y(i-1) déterminée à l'itération précédente, ainsi que le dictionnaire DICT(i-1) qui a servi à son calcul.

Une fois que le rang j du vecteur y(i-1) dans DICT(i-1) a été déterminé, un unique dictionnaire est désigné au niveau suivant. Le dictionnaire choisi DICT(i) est alors défini dans une opération 402 comme étant le j-ème fils du noeud correspondant au dictionnaire DICT(i-1) dans l'arborescence.

On voit donc bien maintenant comment l'architecture de la figure 3 vient structurer le choix des dictionnaires : à chaque fois qu'un dictionnaire est choisi à une itération donnée, seuls ses fils dans l'arbre pourront être choisis dans l'itération suivante.

Cela permet de mettre en oeuvre une fonction de choix Cho() simple. Le compromis à trouver est que cela contraint à prévoir une arborescence dans laquelle les chemins de dictionnaires sont optimisés. Comme cela apparaîtra par la suite, cette condition n'est pas très contraignante compte tenu des méthodes développées par les Demandeurs.

Comme on l'a vu avec la figure 3, le premier mode de réalisation repose sur une arborescence de dictionnaires qui sont optimisés en fonction du chemin pris aux itérations précédentes.

Cette arborescence de dictionnaires optimisés peut être créée au moyen d'une fonction récursive ITD().

La fonction ITD() repose sur un principe de propagation d'un jeu de vecteurs d'entraînement qui est utilisé pour optimiser les dictionnaires au fur et à mesure, À chaque niveau, chaque jeu d'entraînement génère plusieurs jeux de résidus qui servent à entraîner les dictionnaires de niveau inférieur.

La fonction ITD() doit d'abord être initialisée par une opération 500 dans laquelle le premier dictionnaire et le premier jeu de résidus sont calculés.

L'opération 500 est réalisée par une fonction Creat() qui reçoit comme arguments un jeu de P vecteurs d'entraînement y. Dans l'exemple décrit ici, le jeu d'entraînement comprend une multitude de vecteurs d'entraînement y, le nombre P de vecteurs y étant très supérieur à la taille visée pour chacun des dictionnaires de l'arborescence. Ces vecteurs d'entraînement sont choisis aussi variés que possible, afin d'offrir une construction optimale des dictionnaires.

Les vecteurs d'entraînement peuvent être tirés d'une base de données de vecteurs d'entraînement, ou ils peuvent également être synthétiques, c'est-à-dire créés pour recouvrir de manière la plus régulière possible un espace de vecteurs envisagé.

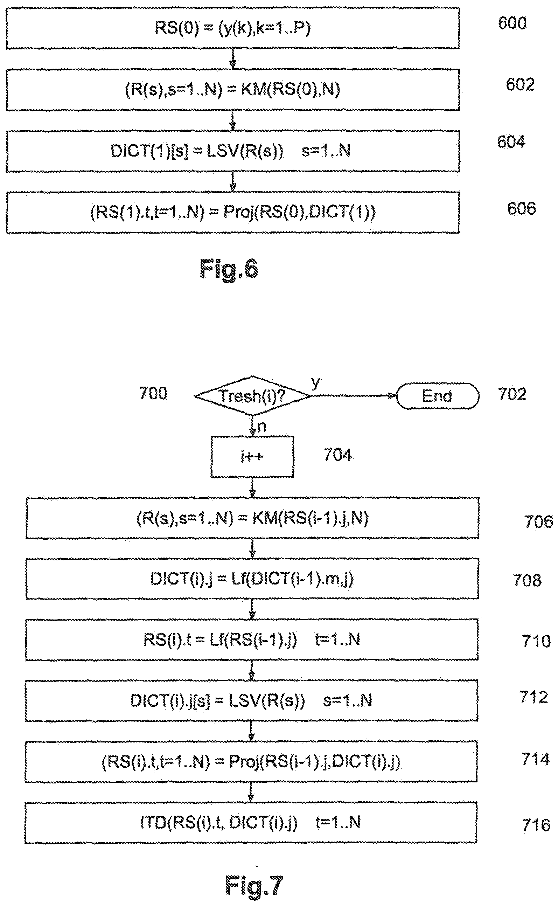

Un exemple de mise en oeuvre de la fonction Creat() est représenté sur la figure 6. Comme on peut le voir sur cette figure, la fonction Creat() part d'une opération 600 dans laquelle les vecteurs d'entraînement y sont stockés dans un jeu de résidus RS(0).
Dans une opération 602, l'outil met en oeuvre une fonction KM() pour partitionner le jeu de résidus RS(0) en un nombre N de jeux de résidus d'entraînement R(s). La fonction KM() est une fonction qui met en oeuvre un algorithme de la famille K-Means, à partir du jeu de résidus RS(0) et du nombre N comme arguments.

Par souci de clarté, on rappellera que, dans un algorithme de la famille K-Means, un ensemble de vecteurs est partitionné de manière itérative selon la manière suivante :
a) les vecteurs sont partitionnés en fonction de leur distance à des centroïdes, la distance dépendant d'une loi de mesure,
b) une fois les vecteurs partionnés, les centroïdes sont recalculés au sein de chaque partition, selon une loi de sélection/calcul de centroïde,
c) l'itération suivante reprend en a) à partir des nouveaux centroïdes, jusqu'à ce qu'une condition d'arrêt portant sur le nombre d'itérations et/ou sur l'évolution des centroïdes soit vérifiée.

On voit donc que dans un algorithme de la famille K-Means, la mesure utilisée pour calculer la distance entre les vecteurs et les centroïdes pour réaliser le partitionnement par itération et la loi de calcul des centroïdes avant chaque itération sont des paramètres qui définissent l'algorithme particulier.

Dans l'algorithme mis en oeuvre dans l'exemple décrit ici, la mesure utilisée est la projection, et la loi de sélection/calcul des centroïdes est basée sur une décomposition de chaque partition en valeurs singulières.

Plus précisément, les vecteurs d'une partition donnée sont d'abord rassemblés côte à côte en une matrice. Cette matrice est ensuite décomposée en valeurs singulières sous la forme U∑V^{T}, où les valeurs singulières sont ordonnées par valeur décroissante dans la diagonale de ∑. Ensuite, la matrice U est réduite à sa première colonne U1 comme centroïde pour cette partition.

La combinaison de la projection comme mesure et la décomposition en valeurs singulières pour les centroïdes présente de nombreux avantages décrits plus bas, notamment en termes d'orthogonalité.

Ensuite, dans une opération 604, le dictionnaire DICT(1) est calculé au moyen d'une fonction LSV(). La fonction LSV() prend comme argument les N jeux de résidus d'entraînement R(s) calculés avec l'opération 602 et les réduit en un dictionnaire.

Pour cela, la fonction LSV() met en oeuvre une loi de sélection basée sur une décomposition de chaque jeu de résidus d'entraînement R(s) en valeurs singulières. Cette loi de sélection est très proche de la loi de calcul des centroïdes de la fonction KM(). Plus précisément, les vecteurs d'un jeu de résidus d'entraînement donné R(s) sont d'abord rassemblés côte à côte en une matrice. Cette matrice est ensuite décomposée en valeurs singulières sous la forme U∑V^{T}, où les valeurs singulières sont ordonnées par valeur décroissante dans la diagonale de ∑.

Ensuite, la matrice U est réduite à sa première colonne U1, et le jeu de résidus d'entraînement R(s) est réduit à ce vecteur U1. Enfin, le dictionnaire DICT(1) est défini comme la concaténation de l'ensemble des vecteurs obtenus par réduction des jeux de résidus d'entraînement R(s).

Une fois que le premier dictionnaire DICT(1) a été calculé, le premier jeu de résidus d'entraînement RS(1) est calculé dans une opération 606. Afin de faciliter la création de l'arborescence de dictionnaires, une arborescence est créée pour les jeux de résidus d'entraînement qui est incluse dans l'arborescence des dictionnaires, comme cela apparaît sur la figure 3. En variante, les jeux de résidus pourraient être stockés dans un arbre à part.

Cela est réalisé par le stockage du résultat d'une fonction Proj() dans chaque fils RS(1).s du premier noeud, la fonction Proj() recevant comme arguments le jeu de résidus d'entraînement RS(0) et le dictionnaire DICT(1).

La fonction Proj() réalise les opérations suivantes pour chaque vecteur du jeu de résidus d'entraînement RS(0) :
- elle détermine l'atome du dictionnaire DICT(1) le plus proche du vecteur, et
- elle stocke le vecteur résidu correspondant à la différence entre le vecteur en entrée et sa projection sur cet atome dans le jeu RS(1).t, où t est l'indice de l'atome dans le dictionnaire DICT(1).

En résultat, le noeud de niveau zéro produit N jeux fils de résidus d'entraînement RS(1) qui ont été tirés du jeu d'entraînement d'entrée RS(0).

Une fois que le premier dictionnaire DICT(1) et le premier jeu de résidus RS(1) ont été calculés, la fonction ITD() est appelée avec ces éléments comme arguments dans une opération 502.

La figure 7 représente un exemple de mise en oeuvre de cette fonction. La fonction ITD() commence par le test d'une condition d'arrêt dans une opération 700. Cette condition d'arrêt est dans l'exemple décrit ici testée par une version restreinte de la fonction Tresh() décrite avec la figure 1.

Ici, la seule condition d'arrêt de la fonction Thresh() est le nombre d'itérations. La raison d'être de cette condition d'arrêt est que, d'un point de vue mathématique, chaque itération correspond à une projection du résidu sur une base formée par les atomes du dictionnaire de cette itération.

Dans le cas où les dictionnaires sont orthogonaux entre eux et/ou la fonction de la famille MP choisie est orthogonale, on projette donc le vecteur par rapport à un nouveau vecteur indépendant de cette base. Il ne peut donc pas y avoir plus d'itérations qu'il n'y a de dimensions dans le vecteur que l'on cherche à approcher.

Donc si d est la dimension du vecteur d'entrée, le nombre maximal d'itérations est d. Cela présente également l'avantage de garantir la convergence de la fonction ITD(). Dans le cas où les dictionnaires ne sont pas orthogonaux entre eux et où la fonction de la famille MP choisie n'est pas orthogonale, alors on considère l'approximation satisfaisante après un nombre voulu d'itérations.

Dans un cas comme dans l'autre, il est judicieux de limiter le nombre d'itérations à une fraction de la taille d, afin d'éviter d'avoir à stocker trop de dictionnaires, Comme les dictionnaires sont optimisés, cela n'impacte pas excessivement la qualité des approximations.

Une fois que le nombre maximal d'itérations est atteint, la fonction ITD() s'arrête dans une opération 702. Dans cette fonction, la condition de seuil pour les résidus n'est pas mise en oeuvre. Avantageusement, les résidus nuls ou inférieurs à un seuil sont retirés des jeux de résidus d'entraînement auxquels ils appartiennent au fil de l'eau.

Après l'opération 700, le compteur d'itération i est incrémenté dans une opération 704. Il convient maintenant de décrire le contexte d'exécution de la fonction ITD(). Si l'on se place après la première itération, l'arbre des dictionnaires comprend un dictionnaire DICT(1) et l'arbre des résidus comprend N jeux de résidus d'entraînement tirés du dictionnaire DICT(1). L'arborescence est donc simple à imaginer,

Si l'on se place dans un niveau quelconque de l'arbre des dictionnaires, cela est un peu plus complexe. Dans le cadre de l'exemple décrit ici, chaque dictionnaire d'un niveau i donne lieu à N dictionnaires de niveau i+1, c'est-à-dire un dictionnaire fils par atome de dictionnaire père, qui sont entraînés sut les jeux de résidus du niveau i correspondant à cet atome.

Dans le cas général (compte tenu que le compteur i vient d'être incrémenté en 704), la fonction ITD() reçoit donc en entrée un jeu de résidus d'entraînement noté RS(i-1).j, correspondant au j-ème atome d'un dictionnaire DICT(i-1).m.

Dans une opération 706, le jeu de résidus d'entraînement de l'itération i-1 est partitionné, comme cela a été fait à l'opération 602. Une fois que cela est fait, on obtient donc N jeux de résidus d'entraînement R(s).

Ensuite, dans une opération 708, le dictionnaire DICT(i).j qui va résulter de ces N jeux de résidus d'entraînement est initialisé en tant que fils du dictionnaire DICT(i-1).m. Ce dictionnaire est initialisé au j-ème rang car il est issu de l'atome j du dictionnaire DICT(i-1).m. Les N jeux de résidus d'entraînement RS(i).t sont alors initialisés dans une opération 710, en tant que fils du jeu de résidus RS(i-1).j.

Le dictionnaire DICT(i).j est alors rempli dans une opération 712 par la fonction LSV() appelée avec les N jeux de résidus d'entraînement R(s) issus de l'opération 706, de manière similaire à ce qui a été fait à l'opération 604.

Une fois le dictionnaire DICT(i).j rempli, le jeu de résidus RS(i-1).j est éclaté dans les N jeux de résidus RS(i).t avec t variant entre 1 et N, au moyen de la fonction Proj() dans une opération 714.

Enfin, la fonction ITD() est relancée N fois dans une opération 716, avec comme couple d'arguments le dictionnaire DICT(i).j d'une part, et chacun des N jeux RS(i).t d'autre part.

Il parait important de noter que dans ce qui précède, les indices donnés ne sont pas des indices absolus mais des indices relatifs. Ainsi, comme mentionné plus haut, le dictionnaire d'entrée est le dictionnaire DICT(i-1).m, un dictionnaire quelconque parmi tous les dictionnaires du niveau i-1.

La notation DICT(i-1).m indique le point d'entrée dans l'arbre des dictionnaires, c'est un pointeur, et son contenu en lui-même importe peu. À ce dictionnaire DICT(i-1).m correspond un jeu de résidus d'entrainement issus d'une itération précédente noté RS(i-2).j. Ce dictionnaire DICT(i-1).m produit N jeux de résidus notés RS(i-1).t, avec t=1 à N. L'exemple décrit ici concerne un seul de ces jeux (le jeu RS(i-1).j), mais comme le montre l'opération 716, la fonction ITD() est appelée N fois avec chaque jeu de résidus d'entraînement RS(i).t produit au cours de l'exécution courante de la fonction ITD().

Le résultat de toutes ces itérations est que l'arbre des dictionnaires est créé de manière récursive, chaque dictionnaire d'un niveau créant N dictionnaires au niveau suivant. En outre, ces dictionnaires sont liés entre eux dans l'arbre des dictionnaires par construction, la convergence étant assurée par la condition d'arrêt liée aux itérations.

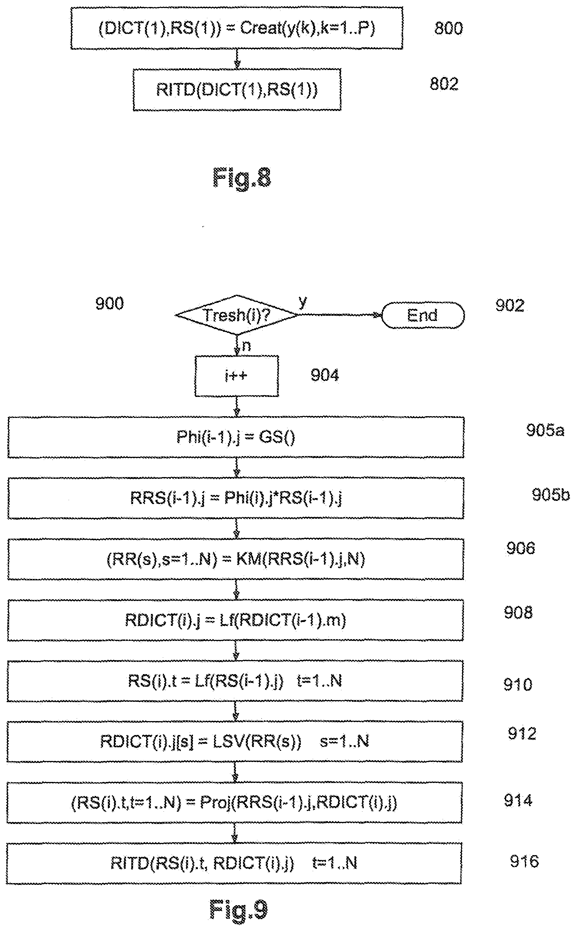

Les figures 8 et 9 représentent des variantes des figures 5 et 7, la fonction Creat() d'initialisation restant la même.

Ces figures sont basées sur la constatation que la méthode de génération des dictionnaires permet de réduire leur taille. En effet, comme on l'a relevé plus haut, chaque jeu de résidu d'entraînement est le résultat d'une projection sur un atome d'un dictionnaire. Par conséquent, les dictionnaires créés au niveau suivant dans l'arbre sur la base de ces jeux de résidus d'entraînement sont orthogonaux à l'atome qui a servi de base à la projection. Les composantes (la ligne) correspondant à cet atome peuvent donc être retirées des résidus d'entraînement car leur contribution sera nulle.

Ainsi, l'opération 800 est identique à l'opération 500 et l'opération 802 diffère de l'opération 502 en ce que c'est une nouvelle fonction RITD() qui est appelée.

D'une manière générale, les opérations similaires à celles de la figure 7 sont renumérotées en remplaçant le chiffre des centaines "7" par le chiffre "9". En ce qui concerne les différences entre les fonctions ITD() de la figure 7 et RITD() de la figure 9, on relève :
- une nouvelle opération 905a qui établit une matrice Phi(i-1).j pour retirer les composantes correspondant à l'atome j de l'itération précédente, au moyen d'une fonction GS(),
- une nouvelle opération 905b qui utilise la matrice Phi(i-1).j pour réduire le jeu de résidus d'entraînement RS(i-1).j,
- un préfixe « R » est rajouté aux éléments réduits pour marquer la réduction, sauf au résidu final qui reste appelé RS(i).t.

La fonction GS() est une fonction d'orthogonalisation qui prend comme vecteur d'entrée l'atome choisi à l'itération précédente, et qui en tire une base de vecteurs orthogonale et complémente cet atome. Cela peut être réalisé par exemple au moyen d'un algorithme de type Gram-Schmidt. Ces vecteurs forment les colonnes de la matrice Phi(i-1).j

Ce procédé permet d'économiser de l'espace, comme chaque dictionnaire voit sa dimension réduite d'une ligne à chaque itération. Cela permet également d'économiser de la puissance de calcul, car la taille des matrices et des dictionnaires réduit à chaque itération.

Les procédés d'entraînement des dictionnaires décrits ci-dessus sont conditionnés par deux éléments principaux.

Tout d'abord, ces procédés créent les dictionnaires « en cascade », c'est-à-dire que chaque dictionnaire d'une itération donnée génère N dictionnaires à l'itération suivante.

Cela est obtenu par l'exécution du partitionnement initial en N jeux de résidus d'entraînement à chaque exécution. En variante, le nombre de jeux de résidus pourrait varier à chaque itération, comme cela est suggéré sur la figure 3 (NA1 pour la première itération, NA2 pour la seconde, etc.), en fonction du paramètre N passé aux opérations 706 et 906.

De plus, la méthode de sélection/calcul des centroïdes dans la méthode de partitionnement est, dans l'exemple décrit, basée à chaque itération sur la sélection de l'atome le plus fort dans la décomposition en valeurs singulières de chaque partition. Cette loi pourrait être remplacée par une loi de sélection/calcul de type barycentrique par exemple.

Ensuite, la méthode de calcul des atomes pour former les dictionnaires est également cruciale, et est basée dans les opérations 712 et 912 sur la sélection de l'atome le plus fort dans la décomposition en valeurs singulières de chaque jeu du partitionnement de jeux de résidus d'entraînement. Une autre loi pourrait être utilisée, de type barycentrique par exemple.

C'est cette même loi de sélection qui est utilisée dans la fonction Cho() pour choisir le dictionnaire pour l'itération courante dans la fonction de la figure 4. En effet, dans l'exemple décrit ici, c'est l'atome issu de la fonction MP() de l'itération précédente qui est utilisé pour désigner le dictionnaire de l'itération courante, ce qui revient à choisir l'atome le plus corrélé dans la décomposition en valeurs singulières.

En variante, une autre loi de sélection pourrait être utilisée pour choisir le dictionnaire d'une itération. Par exemple, une telle loi pourrait sélectionner le dictionnaire désigné par l'atome du dictionnaire DICT(i-1) de l'itération précédente qui se rapproche le plus du vecteur résidu qu'on cherche à approcher, en tenant compte des vecteurs correspondant aux K valeurs singulières les plus fortes, et non plus seulement la première.

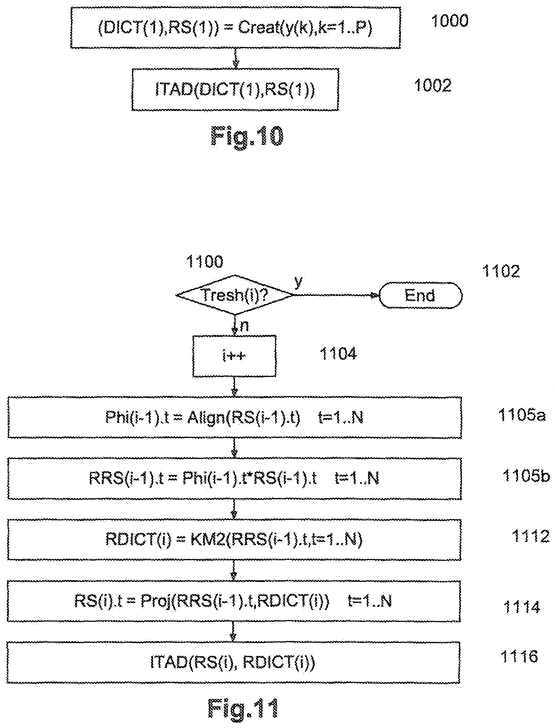

Les figures 10 et 11 représentent d'autres variantes des figures 5 et 7, la fonction Creat() d'initialisation restant identique.

Ces variantes partent du même principe que la variante des figures 8 et 9, mais visent une implémentation plus légère, avec seulement un dictionnaire stocké par niveau d'itération. Ce sont des matrices de réduction Phi(i-1).t qui assureront l'adaptation à chaque atome choisi, ce qui donne N dictionnaires à partir du dictionnaire stocké à chaque niveau.

Du fait que chaque dictionnaire ne génère plus qu'un seul dictionnaire à l'itération suivante, ce mode de réalisation paraît plus simple, et la structure d'arbre est allégée, ce qui réduit les notations d'indice et élimine certaines opérations. Cependant, contrairement au cas des figures 8 et 9, les fonctions Phi(i-1).t ne peuvent plus être implicites, et doivent ici être stockées avec le dictionnaire RDICT(i).

Pour la figure 10, la seule différence avec la figure 8 est que c'est la fonction ITAD() qui est appelée et non plus la fonction RITD().

D'une manière générale, les opérations similaires à celles de la figure 9 sont renumérotées en remplaçant le chiffre des centaines "9" par le nombre "11". En ce qui concerne les différences entre les fonctions ITAD() de la figure 11 et RITD() de la figure 9, on relève :
- l'opération 1105a est différente de l'opération 905a en ce que les matrices Phi(i).t sont construites par une fonction Align() qui est précisée plus bas,
- l'opération de partionnement 906 pour générer N jeux de résidus d'entraînement et N dictionnaires résultants est supprimée,
- les opérations liées à la gestion des arbres 908 et 910 sont supprimées,
- l'opération 912 de génération du dictionnaire est réalisée par une fonction KM2() qui est précisée plus bas, et non plus par la fonction LSV(),
- l'opération 1116 n'appelle qu'une seule récursion de la fonction ITAD(), mais avec un jeu de résidu qui comprend les N jeux de résidus qui viennent d'être créés (et l'opération 1105a en tient compte).

La fonction Align() réalise une décomposition en valeurs singulières de chaque jeu RS(i-1).t sous la forme U∑V^{T}, où les valeurs singulières sont ordonnées par valeur décroissante dans la diagonale de ∑.

Ensuite, la matrice U est réduite à ses colonnes qui correspondent aux valeurs singulières non nulles de ∑. Ainsi, la matrice Phi(i-1).t forme une base orthogonale de RS(i-1).t.

La fonction KM2() est très proche de la fonction KM() dans la mesure où elle exécute les mêmes calculs. Cependant, elle diffère par ses entrées et sa sortie. Ici, l'ensemble des jeux réduits RRS(i-1).t sont regroupés pour former l'entrée, et la sortie est le dictionnaire RDICT(i).

Or, la fonction KM2() utilise comme loi de sélection/calcul des centroïdes la sélection du vecteur correspondant à la valeur singulière la plus forte. Ce sont ces centroïdes qui sont utilisés pour remplir le dictionnaire RDICT(i) dans une opération 1112.

De plus, comme cette construction est orthogonale, les opérations 1105a et 1105b "alignent" les résidus, dans le sens où tous les jeux de résidus réduits RRS(i-1).j vont avoir la même matrice U dans leur décomposition en valeurs singulières. Cela permet d'utiliser un unique dictionnaire RDICT(i), les matrices Phi(i-1).t permettant d'adapter ce dictionnaire RDICT(i) à chaque jeu RRS(i-1).j.

Enfin, dans l'opération 1116, il est fait référence à RS(i), dans le sens où c'est la combinaison des N jeux RS(i).t calculés à l'opération 1114.

C'est cet alignement qui permet de ne conserver qu'un dictionnaire par itération i, tout en bénéficiant des avantages de la variante des figures 8 et 9. Cela vient au prix du stockage des matrices Phi(i).t qui permettent cet alignement.

Dans ce qui précède, il a été prévu de varier le dictionnaire à chaque itération. Cependant, la fonction Cho() pourrait choisir un dictionnaire par groupe d'un nombre choisi d'itérations, ou n'être appelée que toutes les K itérations.

Par ailleurs, il a été présenté un schéma dans lequel la fonction MP() est la même pour toutes les itérations. Cependant, cette fonction présente un coût relativement peu élevé, et on pourrait envisager d'exécuter plusieurs fonctions MP() distinctes mettant en oeuvre une version différente de la famille matching pursuit, en ne gardant que la meilleure à chaque fois.

En outre, le fait de choisir et d'entraîner les dictionnaires par décomposition en valeurs singulières génère des éléments orthogonaux ce qui réduit l'intérêt d'utiliser des fonctions de types OMP ou OOMP. Cependant, dans le cas où la loi de sélection pour les dictionnaires serait différente, ces techniques prendraient tout leur intérêt.

## Revendications

1. Outil informatique de traitement d'un signal **caractérisé en ce qu'**il comprend :
- une mémoire de travail (206) pour recevoir des données d'entrée,
- une mémoire auxiliaire (204) pour stocker une pluralité de dictionnaires d'approche,
- un réducteur (202) agencé pour calculer itérativement des données d'approximation de données d'entrée, les itérations successives étant de type poursuite adaptative,
- un sélectionneur (200) agencé pour choisir un dictionnaire d'approche dans ladite mémoire auxiliaire en fonction d'une loi de sélection basée sur certaines au moins des itérations précédentes,
dans lequel le réducteur (202) appelle le sélectionneur (200) à chaque itération et utilise le dictionnaire ainsi choisi dans la poursuite adaptative.
dans lequel pour une itération donnée, et en présence d'un dictionnaire d'approche choisi par le sélectionneur, le réducteur :
* détermine un atome du dictionnaire d'approche correspondant aux données d'entrée courantes de l'itération donnée,
* définit un identifiant d'atome correspondant et un coefficient de proportionnalité entre les données d'entrée courantes et l'atome comme données d'approximation,
* calcule un résidu correspondant à la différence entre les données d'entrée et l'atome multiplié par son coefficient de proportionnalité, et
* appelle l'itération suivante avec l'identifiant d'atome pour le sélectionneur et le résidu comme nouvelles données d'entrée courantes, la loi de sélection pour l'itération suivante étant basée sur l'identifiant d'atome défini lors de l'itération donnée.

2. Outil informatique selon la revendication 1, dans lequel la loi de sélection comprend le choix d'un dictionnaire en fonction du numéro d'itération courante et/ou des données d'approximation calculées aux itérations précédentes.

3. Outil informatique selon la revendication 2, dans lequel les dictionnaires d'approche sont reliés entre eux par une structure de type arbre, et dans lequel la loi de sélection comprend le choix d'un dictionnaire dans un niveau de l'arbre tiré du numéro de l'itération courante.

4. Outil informatique selon la revendication 3, dans lequel chaque dictionnaire d'approche d'un niveau donné est associé à un nombre choisi de dictionnaires d'approche fils dans le niveau suivant de l'arbre, et dans lequel la loi de sélection comprend le choix d'un dictionnaire d'approche parmi les fils du dictionnaire d'approche sélectionné à l'itération précédente.

5. Outil informatique selon la revendication 4, dans lequel chaque atome de chaque dictionnaire d'approche d'un niveau donné est associé à un dictionnaire fils dans le niveau suivant de l'arbre, et dans lequel la loi de sélection comprend pour une itération donnée le choix du dictionnaire fils correspondant à l'atome désigné par l'identifiant d'atome des données d'approximation calculées à l'itération précédente.

6. Outil informatique selon l'une des revendications 3 à 5, dans lequel chaque dictionnaire d'un niveau donné dans l'arbre comprend des atomes dont la dimension est inférieure de un par rapport à la dimension des atomes des dictionnaires du niveau supérieur.

7. Outil informatique selon la revendication 6, dans lequel le réducteur calcule à chaque itération un jeu de données de réduction, et dans lequel le réducteur utilise ce jeu de données de réduction pour le calcul des données d'approximation successives.

8. Outil informatique selon la revendication 6, dans lequel l'arbre comprend un unique dictionnaire par niveau, dans lequel la mémoire auxiliaire stocke en outre des jeux de données de réduction, chaque atome du dictionnaire d'un niveau donné dans l'arbre étant associé à un jeu de données de réduction.

9. Outil informatique selon la revendication 8, dans lequel le réducteur utilise un jeu de données de réduction pour le calcul des données d'approximation successives.

## Patentansprüche

1. Informatikwerkzeug zum Verarbeiten eines Signals, **dadurch gekennzeichnet, dass** es Folgendes umfasst:
- einen Arbeitsspeicher (206) zum Empfangen von Eingangsdaten,
- einen Zusatzspeicher (204) zum Speichern von mehreren Annäherungsverzeichnissen,
- einen Reduzierer (202), ausgelegt zum iterativen Berechnen von Annäherungsdaten von Eingangsdaten, wobei die sukzessiven Iterationen vom adaptiven Verfolgungstyp sind,
- einen Selektor (200), ausgelegt zum Wählen eines Annäherungsverzeichnisses in dem Zusatzspeicher in Abhängigkeit von einem Auswahlgesetz auf der Basis von wenigstens bestimmten der vorherigen Iterationen,
wobei der Reduzierer (202) den Selektor (200) bei jeder Iteration aufruft und das so gewählte Verzeichnis bei der adaptiven Verfolgung benutzt,
wobei für jede gegebene Iteration und in Anwesenheit eines für den Selektor gewählten Annäherungsverzeichnisses der Reduzierer:
* ein Atom des Annäherungsverzeichnisses entsprechend laufenden Eingangsdaten der gegebenen Iteration bestimmt,
* einen entsprechenden Atomidentifikator und einen Proportionalitätskoeffizienten zwischen den laufenden Eingangsdaten und dem Atom als Annäherungsdaten definiert,
* einen Rest entsprechend der Differenz zwischen den Eingangsdaten und dem Atom multipliziert mit seinem Proportionalitätskoeffizienten berechnet, und
* die folgende Iteration mit dem Atomidentifikator für den Selektor und den Rest als neue laufende Eingangsdaten aufruft, wobei das Auswahlgesetz für die folgende Iteration auf dem bei der gegebenen Iteration definierten Atomidentifikator basiert.

2. Informatikwerkzeug nach Anspruch 1, bei dem das Auswahlgesetz die Wahl eines Verzeichnisses in Abhängigkeit von der laufenden Iterationsnummer und/oder von in den vorherigen Iterationen berechneten Annäherungsdaten umfasst.

3. Informatikwerkzeug nach Anspruch 2, bei dem die Annäherungsverzeichnisse untereinander durch eine Struktur des Baumtyps verbunden sind und bei dem das Auswahlgesetz das Wählen eines Verzeichnisses auf einer Ebene des Baums umfasst, abgeleitet von der laufenden Iterationsnummer.

4. Informatikwerkzeug nach Anspruch 3, bei dem jedes Annäherungsverzeichnis einer gegebenen Ebene mit einer gewählten Anzahl von Kind-Annäherungsverzeichnissen auf der folgenden Ebene des Baums assoziiert ist, und bei dem das Auswahlgesetz die Wahl eines Annäherungsverzeichnisses unter den Kindern des bei der vorherigen Iteration gewählten Annäherungsverzeichnisses umfasst.

5. Informatikwerkzeug nach Anspruch 4, bei dem jedes Atom jedes Annäherungsverzeichnisses einer gegebenen Ebene mit einem Kindverzeichnis auf der folgenden Ebene des Baums assoziiert ist, und wobei das Auswahlgesetz für eine gegebene Iteration die Wahl des Kindverzeichnisses entsprechend dem Atom umfasst, bezeichnet durch den Atomidentifikator von bei der vorherigen Iteration berechneten Annäherungsdaten.

6. Informatikwerkzeug nach einem der Ansprüche 3 bis 5, bei dem jedes Verzeichnis einer gegebenen Ebene auf dem Baum Atome umfasst, deren Abmessung kleiner als eins in Bezug auf die Abmessung von Atomen der Verzeichnisse der höheren Ebene ist.

7. Informatikwerkzeug nach Anspruch 6, bei dem der Reduzierer in jeder Iteration einen Satz von Reduktionsdaten berechnet und bei dem der Reduzierer diesen Satz von Reduktionsdaten zum Berechnen der sukzessiven Annäherungsdaten benutzt.

8. Informatikwerkzeug nach Anspruch 6, bei dem der Baum ein einziges Verzeichnis pro Ebene umfasst, wobei der Zusatzspeicher ferner die Sätze von Reduktionsdaten speichert, wobei jedes Atom des Verzeichnisses einer gegebenen Ebene in dem Baum mit einem Satz von Reduktionsdaten assoziiert ist.

9. Informatikwerkzeug nach Anspruch 8, bei dem der Reduzierer einen Satz von Reduktionsdaten für die Berechnung von sukzessiven Annäherungsdaten benutzt.

## Claims

1. A computer tool for processing a signal, **characterised in that** it comprises:
a working memory (206) to receive input data,
an auxiliary memory (204) to store several approximation dictionaries,
a reducer (202) arranged to calculate iteratively approximation data on the input data, in which the successive iterations are of the matching pursuit type,
a selector (202) arranged to select an approximation dictionary in the auxiliary memory as a function of a selection rule based on at least some of the preceding iterations,
in which the reducer (202) calls the selector (200) in each iteration, and uses the dictionary thus selected in the matching pursuit,
wherein, for a given iteration, and in the presence of the approximation dictionary selected by the selector, the reducer:
* determines an atom from the approximation dictionary corresponding to the current input data of the given iteration;
* defines a corresponding atom identifier and a proportionality coefficient amongst the current input data and the atom as approximation data;
* calculates a remainder corresponding to the difference between the input data and the atom, multiplied by its proportionality coefficient, and
* calls the following iteration with the atom identifier for the selector, and the residue, as new current input data, the selection rule for the next iteration being based on the atom identifier defined during the given iteration.

2. The computer tool as recited in claim 1, wherein the selection rule comprises the selection of the approximation dictionary as a function of the number of the current iteration and/or the approximation data calculated in the preceding iterations.

3. The computer tool as recited in claim 2, wherein the approximation dictionaries are interconnected by a tree structure, and the selection rule comprises the selection of the approximation dictionary at a level of the tree taken from the number of the current iteration.

4. The computer tool as recited in claim 3, wherein each approximation dictionary of a given level is associated with a selected number of child approximation dictionaries at the following level of the tree, and the selection rule comprises the selection of the approximation dictionary from amongst the children of the approximation dictionary selected in the preceding iteration.

5. The computer tool as recited in claim 4, wherein each atom of each approximation dictionary of one given level is associated with a child dictionary in the following level of the tree, and the selection rule for a given iteration comprises the selection of the child dictionary corresponding to the atom designated by the atom identifier of the approximation data calculated in the preceding iteration.

6. The computer tool as recited in claims 3 to 5, wherein each approximation dictionary of one given level in the tree comprises atoms whose size is smaller of one than the atoms of the higher-level dictionaries.

7. The computer tool as recited in claim 6, wherein the reducer calculates in each iteration a set of reduction data, and the reducer uses the set of reduction data for the calculation of the successive approximation data.

8. The computer tool as recited in claim 6, wherein the tree comprises a single dictionary per level, in which the auxiliary memory additionally stores sets of reduction data, with each dictionary atom of a given level in the tree being associated with a set of reduction data.

9. The computer tool as recited in claim 8 wherein the reducer uses a set of reduction data to calculate the successive approximation data.
